# EUROPÄISCHE PATENTANMELDUNG

(11) **EP 2 333 792 A1**
(43) Veröffentlichungstag der Anmeldung: **15.06.2011**
(21) Anmeldenummer: 09306221.4
(22) Anmeldetag: 14.12.2009
(51) Int. Cl.: H01B 12/06, H01L 39/04, H01L 39/12, H01L 39/14

(54) **Anordnung mit supraleitfähigen Kabeln**

(71) Anmelder: Nexans, 75008 Paris (FR)
(72) Erfinder: Dr.-Ing. Stemmle, Mark, 30161, Hannover (DE); Dr.-Ing. Marzahn, Erik, 30853, Langenhagen (DE)
(74) Vertreter: Döring, Roger

(57) **Zusammenfassung**

Es wird eine Anordnung mit drei in einem Kryostat angeordneten supraleitfähigen Kabeln angegeben, die einen supraleitfähigen elektrischen Leiter (5) und ein denselben umgebendes Dielektrikum (8) aufweisen, bei welcher der Kryostat neben den drei Kabeln einen Freiraum zum Durchleiten eines Kühlmittels umschließt. Jedes der drei Kabel weist in seinem Aufbau eine den Leiter (5) konzentrisch umgebende, rundum geschlossene Schicht (7) aus ferromagnetischem Material auf.

## Beschreibung

Die Erfindung bezieht sich auf eine Anordnung mit drei in einem Kryostat angeordneten supraleitföhigen Kabeln, die einen suproleitföhigen elektrischen Leiter und ein denselben umgebendes Dielektrikum aufweisen, bei welcher der Kryostat neben den drei Kabeln einen Freiraum zum Durchleiten eines Kühlmittels umschließt (US 2004/0256126 A1).

Eine derartige Anordnung wird insbesondere zur Energieübertragung mittels dreiphasigem Wechselstrom bzw. Drehstrom in Mittelspannungsnetzen verwendet. Die darin eingesetzten suproleitföhigen Kabel haben in heutiger Technik supraleitfähige elektrische Leiter aus einem Verbundwerkstoff, welcher keramisches Material enthält, das bei ausreichend tiefen Temperaturen in den suproleitföhigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rare-earth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitföhigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe.

Bei der bekannten Anordnung nach der eingangs erwähnten US 2004/0256126 A1 mit drei in einem Kryostat angeordneten supraleitfähigen Kabeln, besteht jedes der drei Kabel aus einem um einen zylindrischen Träger herumgewickelten supraleitfähigen Leiter, einem denselben umgebenden Dielektrikum, einem darüber angeordneten supraleitfähigen Schirm oder Schutzleiter und einer über diesem angebrachten Schicht aus Isoliermaterial. Der Schirm oder Schutzleiter ist beim Betrieb der Anordnung in gegenüber dem Leiter entgegengesetzter Richtung von Strom durchflossen. Dadurch soll das magnetische Feld des jeweiligen Kabels soweit abgeschirmt sein, daß außerhalb desselben kein störendes magnetisches Feld vorhanden ist. Der Aufwand an supraleitfähigem, teurem Material für die Leiter und den Schirm bzw. Schutzleiter der drei Kabel ist hoch.

Der Erfindung liegt die Aufgabe zugrunde, die eingangs geschilderte Anordnung so zu gestalten, daß sie unter Beibehalt der Störfreiheit durch magnetische Felder mit vermindertem Aufwand herstellbar ist.

Diese Aufgabe wird gemäß der Erfindung dadurch gelöst, daß jedes der drei Kabel in seinem Aufbau eine den Leiter konzentrisch umgebende, rundum geschlossene Schicht aus ferromagnetischem Material aufweist.

Bei den drei Kabeln dieser Anordnung ist supraleitfähiges Material jeweils nur für die Leiter eingesetzt. Aufgrund der den Leiter jedes Kabels umgebenden ferromagnetischen Schicht ist der Magnetfeldverlauf innerhalb dieser Kabel vergleichmäßigt und für jeden Leiter gleich. Der gegenseitige Magnetfeldeinfluß der drei Kabel aufeinander wird dadurch ebenfalls ninimiert. Das wirkt sich günstig auf die Wechselstromverluste der supraleitfähigen Leiter aus. Außerhalb der Kabel ist außerdem kein störendes Magnetfeld vorhanden, weil sich bei Drehstrom die Magnetfelder der einzelnen Kabel größtenteils kompensieren. Insgesamt wird somit für die Anordnung weniger supraleitfähiges Material benötigt, da kein supraleitender Schirm erforderlich ist. Da der Magnetfeldverlauf in jedem Kabel gleich ist, sind auch die Wechselstromverluste gleich. Daher ist außerdem die Temperaturverteilung innerhalb der drei Kabel sehr ähnlich.

Ausführungsbeispiele des Erfindungsgegenstandes sind in den Zeichnungen dargestellt.

Es zeigen:
Fig. 1 ein Schnittbild einer Anordnung nach der Erfindung in schematischer Darstellung.
Fig. 2 ein in der Anordnung nach Fig. 1 einsetzbares Kabel.
Fig. 3 eine gegenüber Fig. 2 abgewandelte Ausführungsform des Kabels.
Fig. 4 eine gegenüber Fig. 1 ergänzte Ausführungsform der Anordnung.

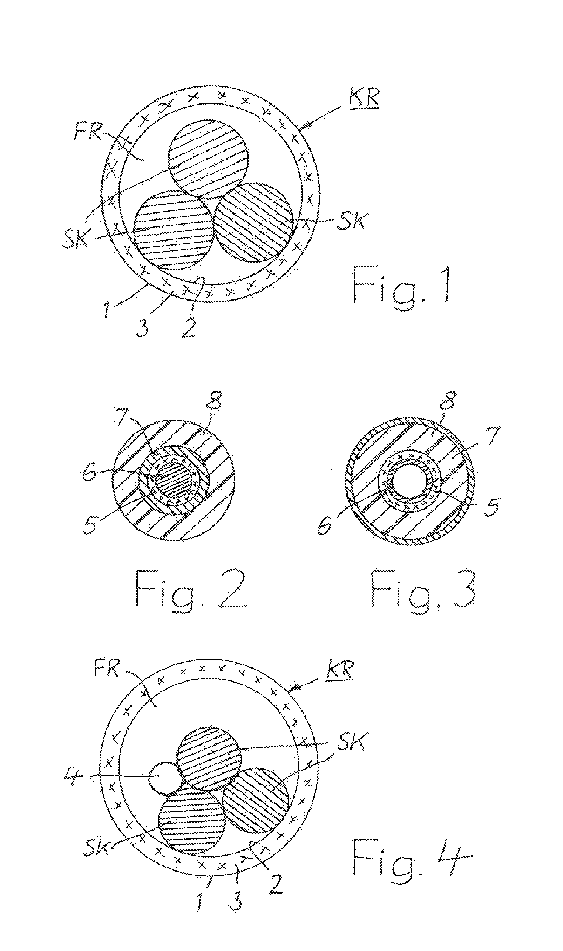

Die Anordnung nach Fig. 1 besteht aus einem Kryostat KR und drei in demselben angeordneten supraleitfähigen Kabeln SK, deren Aufbau aus den Fig. 2 und 3 hervorgeht. Der Kryostat KR besteht aus zwei konzentrisch und mit Abstand zueinander angeordneten metallischen Rohren 1 und 2, zwischen denen eine Vakuumisolierung 3 angebracht ist. Außer den drei Kabeln SK umschließt der Kryostat KR auch einen Freiraum FR zum Durchleiten eines Kühlmittels. Innerhalb des Kryostats KR kann gemäß Fig. 4 auch noch eine Rohrleitung 4 für die Rückführung des entlang der Übertragungsstrecke wärmer gewordenen Kühlmittels zu einer Einheit angebracht sein, in welcher eine Rückkühlung desselben erfolgt.

Jedes der drei supraleitfähigen Kabel SK besteht aus einem supraleitfähigen Leiter 5, der um einen vorzugsweise zylindrischen Träger 6 herum angeordnet ist. Er kann aus einem supraleitfähigen Material der 1. Generation oder der 2. Generation bestehen. Der Leiter 5 kann aus rechteckigen Streifen oder aus runden Drähten aufgebaut sein, die um den Träger 6 herumgewickelt sein können. Der Träger 6 kann als Stab oder Seil, aber gemäß Fig. 3 auch als Rohr ausgeführt sein.

Über dem supraleitfähigen Leiter 5 ist bei der Ausführungsform des Kabels nach Fig. 2 eine an demselben anliegende, rundum geschlossene Schicht 7 aus ferromagnetischem Material angebracht, die also den Leiter 5 konzentrisch umgibt. Sie schirmt das Magnetfeld des Leiters 5 nach außen ab. Die ferromagnetische Schicht 7 ist von einem Dielektrikum 8 umgeben. Für die ferromagnetische Schicht 7 kann grundsätzlich jedes bekannte ferromagnetische Material eingesetzt werden, das mit Vorteil als Band auf den supraleitfähigen Leiter 5 aufgebracht werden kann. Es soll vorzugsweise nur sehr geringe Hystereseverluste haben. Wegen der Verlustminimierung in den einzelnen Kabeln soll die ferromagnetische Schicht möglichst dünn gehalten werden, mit einer Dicke von beispielsweise 0,1 mm. Sie kann aber auch dicker sein.

In der Ausführungsform des supraleitfähigen Kabels SK nach Fig. 3 ist das Dielektrikum 8 direkt auf den supraleitfähigen Leiter 5 aufgebracht. Die den Leiter 5 konzentrisch umgebende Schicht 7 aus ferromagnetischem Material ist hier über dem Dielektrikum 8 angebracht.

Beim Betrieb der Anordnung wird ein Kühlmittel durch den Freiraum FR des Kryostats KR geleitet, das mit zunehmender Länge der Übertragungsstrecke wärmer wird. Es muß daher aus dem Kryostat KR herausgenommen und rückgekühlt werden. Das kann an sich an jedem Ende einer Übertragungsstrecke durchgeführt werden. In der Regel wird das Kühlmittel aber zum Einspeisepunkt zurückgeführt. Dazu kann eine außerhalb des Kryostats KR verlaufende Rohrleitung eingesetzt werden. Wenn zumindest eines der Kabel SK einen rohrförmigen Träger 6 (Fig. 3) hat, kann das Kühlmittel auch durch diesen Träger zurückgeführt werden. Gemäß Fig. 4 ist es - wie weiter oben schon erwähnt - aber auch möglich, die im Kryostat KR zusätzlich angebrachte Rohrleitung 4 für die Rückführung des Kühlmittels einzusetzen.

Sowohl bei dem Kabel nach Fig. 2 als auch bei dem nach Fig. 3 kann über der außen liegenden Schicht noch eine Schutzschicht angebracht werden. Bei der Ausführungsform des Kabels nach Fig. 2 kann außerdem zusätzlich eine Metallschicht über dem Dielektrikum 8 angebracht werden, um die Kapazitäten der einzelnen Kabel zu vergleichmäßigen.

## Patentansprüche

1. Anordnung mit drei in einem Kryostat angeordneten supraleitfähigen Kabeln, die einen supraleitfähigen elektrischen Leiter und ein denselben umgebendes Dielektrikum aufweisen, bei welcher der Kryostat neben den drei Kabeln einen Freiraum zum Durchleiten eines Kühlmittels umschließt, **dadurch gekennzeichnet, daß** jedes der drei Kabel (SK) in seinem Aufbau eine den Leiter (5) konzentrisch umgebende, rundum geschlossene Schicht (7) aus ferromagnetischem Material aufweist.

2. Anordnung nach Anspruch 1, **dadurch gekennzeichnet, daß** die Schicht (7) aus ferromagnetischem Material direkt auf dem Leiter (5) des jeweiligen Kabels aufliegt.

3. Anordnung nach Anspruch 1, **dadurch gekennzeichnet, daß** die Schicht (7) aus ferromagnetischem Material um das Dielektrikum (8) des jeweiligen Kabels herumgeformt ist.
